# EUROPÄISCHE PATENTSCHRIFT

(11) **EP 3 496 920 B1**
(45) Veröffentlichungstag und Bekanntmachung des Hinweises auf die Patenterteilung: **27.09.2023**
(21) Anmeldenummer: 17749433.3
(22) Anmeldetag: 03.08.2017
(51) Int. Cl.: B28C 1/18, C04B 33/20, C04B 33/30, B28B 17/02, B28B 3/02

(54) **VERFAHREN UND ANLAGE ZUR HERSTELLUNG EINES DACHZIEGELS SOWIE DACHZIEGEL**
METHOD AND SYSTEM FOR PRODUCING A ROOF TILE, AND ROOF TILE
PROCÉDÉ ET INSTALLATION POUR LA FABRICATION D'UNE TUILE AINSI QUE TUILE

(30) Priorität: 08.08.2016 DE 102016114654
(43) Veröffentlichungstag der Anmeldung: 19.06.2019
(73) Patentinhaber: BMI Deutschland GmbH, 61440 Oberursel (DE)
(72) Erfinder: WINTER, Frank, 31162 Bad Salzdetfurth (DE)
(74) Vertreter: Patentanwälte Olbricht Buchhold Keulertz
(86) Internationale Anmeldenummer: PCT/EP2017/069715
(87) Internationale Veröffentlichungsnummer: WO 2018/029091

(56) Entgegenhaltungen:
- AT-B- 124 409
- DD-A5- 285 772
- DE-A1- 2 045 084
- FR-A1- 2 495 604
- JP-A- H08 217 527
- US-A- 4 496 501

## Beschreibung

Die Erfindung betrifft ein Verfahren sowie eine Anlage zur Herstellung eines Dachziegels sowie einen mit einem solchen Verfahren hergestellten Dachziegel.

Die Herstellung von Dachziegeln erfolgt üblicherweise im Naßpressverfahren. Bei diesem Verfahren werden Ton und Lehm in der Grube abgebaut, anschließend gemischt, aufbereitet und im Sumpfhaus, für die Produktion fertig vorbereitet, gelagert. Aus der aufbereiteten Tonmischung wird zuerst durch eine Strangpresse ein endloser Tonstrang extrudiert, der nachfolgend in so genannte Batzen geschnitten wird. In einer Revolverpresse, in die jeweils für die Formung der Ober- und Unterseite des Dachziegels Gipsformen eingelegt sind, erhält der Batzen eine dem Dachziegel entsprechende Form. Nach dem Pressvorgang weist der Dachziegel bereits eine so genannte Grünfestigkeit auf, die es erlaubt, den grünen Dachziegel aus der Gipsform zu entnehmen und auf Trockenrahmen zu stapeln und so der Trocknung zuzuführen. Die Trocknung des grünen Dachziegels erfolgt über einen Zeitraum von 24 bis 60 Stunden bei einer Temperatur zwischen 80°C und 120°C. Hierbei reduziert sich der Feuchtegehalt des Dachziegels in der Regel auf weniger als 4%. Soll die Oberfläche der Dachziegel engobiert oder glasiert werden, um verschiedene Farbtöne zu erzielen, dann werden die Dachziegel zuerst für die Oberflächenbeschichtung vereinzelt, danach auf Brennkassetten abgelegt und anschließend zusammen mit den Brennkassetten in die Tunnelofenwagen gestapelt. Der Brennvorgang erfolgt im Tunnelofen über einen Zeitraum von 24 bis 36 Stunden bei einer Temperatur zwischen 980°C und 1 100°C. Die gebrannten Dachziegel werden anschließend aus dem Tunnelofenwagen entladen, von den Brennkassetten getrennt und der Verpackung zugeführt.

Um die Bestandteile des Tons und des Lehms bei der Rohstoffaufbereitung zu zerkleinern, zu homogenisieren und um später eine für den Extrusionsvorgang plastisch formbare Tonmischung zu erhalten, wird der Tonmischung mehrfach Wasser zugegeben. Der im Sumpfhaus gelagerte Ton weist einen Feuchtegehalt von ca. 15% bis 18% auf, der durch eine weitere Wasserzugabe kurz vor der Strangpresse auf 18% bis 20% erhöht wird.

Während des Pressvorgangs muss sichergestellt werden, dass das in der Tonmischung gebundene Wasser aus dem Ton und aus der Pressform entweichen kann. Entweicht das Wasser nicht, verbleibt es in der Tonmischung und hinterlässt im gebrannten Dachziegel Poren, die die Frost-Tau-Wechselbeständigkeit des Dachziegels reduzieren. Daher werden die Pressformen aus Gips hergestellt und mit Entwässerungsleitungen ausgestattet, so dass Wasser den Ton aufgrund der hygroskopischen Eigenschaften des Gipses entzogen wird. Die Standzeiten der Gipsformen sind gering, so dass die Gipsformen der Revolverpresse häufig ersetzt werden müssen, was zu Produktionsunterbrechungen führt. Die separate Herstellung der Gipsformen ist zudem arbeitsintensiv und teuer.

Nachteilig ist auch, dass der Dachziegel nach dem Pressen mit ca. 18% immer noch einen hohen Feuchtegehalt besitzt. Das noch im Ton enthaltene Wasser muss dem grünen Dachziegel während der Trocknung wieder entzogen werden, um einen für den Brennvorgang zulässigen Feuchtegehalt von weniger als 2% zu erreichen. Aufgrund des starken Wasserentzugs kommt es zu einer hohen Schwindung und damit zu Trockenfehlern und Deformationen bei den Dachziegeln.

Die Trocknung der Dachziegel ist zudem mit hohen Investitionskosten behaftet, da die Anschaffungskosten eines Trockenofens sowie der Platzbedarf einer solchen Anlage sehr hoch sind. Des Weiteren ist die Beschickung des Trockenofens mit einem hohen Handling-Aufwand verbunden. Im Betrieb verursacht der Trockenofen aufgrund der langen Trockenzeiten und der hohen Trockentemperaturen erhebliche Energiekosten.

Um die dem Naßpressverfahren anhaftenden Nachteile zu beseitigen, schlägt die DE 195 26 849 A1 vor, Dachziegel im Trockenpressverfahren herzustellen. Dabei wird der aus der Grube kommende Ton über Beschickter, Kollergang, Walzwerke und Mischer einem Zwischenlager zugeführt. Aus diesem aufbereiteten, aufgeschlossenen, erdfeuchten Ton wird dann ein Granulat hergestellt, indem zuerst dünne Tonstränge extrudiert werden, die nach dem Austritt aus dem Extruder in kleine Formkörper zerschnitten und mit trockenem Tonstaub umhüllt werden, so dass ein feuchtes Tongranulat mit enorm großer Oberfläche entsteht, welches schnell trocknet. Auf diese Weise entsteht ein vorgetrocknetes, rieselfähiges aber noch plastisch verformbares Granulat, das in einer Presse zu einem grünen Dachziegel verpresst wird.

Aufgrund der Trocknung des Granulats weisen die grünen Dachziegel eine sehr geringe Restfeuchte auf, so dass anstelle von Gipsformen mit geringer Standzeit Stahlpressformen eingesetzt werden können. Außerdem ist keine oder nur noch eine sehr kurze Trocknung der grünen Dachziegel vor dem Brennvorgang erforderlich. Da der Wasserentzug bereits vor dem Pressvorgang erfolgt ist, findet die hauptsächliche Schwindung im Granulat und nicht, wie bei Nasspressen üblich, bei der Trocknung der grünen Dachziegel statt. Es treten daher keine Trocknungsfehler mehr auf, die sich beim Brennen der Dachziegel durch Verzug bemerkbar machen können.

Nachteilig ist bei dem bekannten Verfahren jedoch der hohe verfahrenstechnische Aufwand für die Granulatherstellung, der hohe Investitions- und Betriebskosten für die entsprechenden Maschinen und Anlagen nach sich zieht.

Aus der AT 124 409 B ist des Weiteren ein Verfahren zur Herstellung von Ziegeln bekannt, bei dem Ziegel aus Ton mit einem Wassergehalt von 10% gepresst und gebrannt werden. Vor dem Verpressen des Tons wird dieser granuliert, so dass er eine Korngrößte von 2-5 mm aufweist.

Aus der JP H08 217527 A ist ferner eine Einrichtung zur Herstellung von Tonziegeln bekannt, bei der eine Feuchtigkeitsüberwachung zum Steuern eines Form- und Knetprozesses genutzt wird. Hierdurch kann Ton mit unterschiedlichem Wassergehalt und gegebenenfalls ohne vorherige Trocknung verarbeitet werden.

Der Erfindung liegt die Aufgabe zu Grunde, ein Verfahren und eine Anlage zum Trockenpressen von Dachziegeln bereitzustellen, das sich durch geringe Investitions- und Betriebskosten auszeichnet und das die Herstellung von profilierten Dachziegeln mit hoher Abformgenauigkeit und mit hoher Frost-Tau-Wechselbeständigkeit ermöglicht. Aufgabe der Erfindung ist es des Weiteren, einen Dachziegel bereitzustellen, der günstig und mit hoher Genauigkeit herzustellen ist und eine hohe Frost-Tau-Wechselbeständigkeit aufweist.

Hauptmerkmale der Erfindung sind in den Ansprüchen 1, 17 und 24 angegeben. Ausgestaltungen sind Gegenstand der Ansprüche 2 bis 16 sowie 18 bis 23 und 25.

Zur Lösung der Aufgabe wird ein Verfahren zur Herstellung eines Dachziegels aus Ton mit den in Anspruch 1 offenbarten Schritten bereitgestellt.

Grundsätzlich findet bei einem Trockenpressverfahren die mit dem Wasserentzug verbundene Schwindung bereits im Rohstoff vor dem Einbringen in die Pressform statt. Aufgrund der zu Anfang erfolgten Trocknung des Tons weist das Tonmaterial nur einen geringen Feuchtegehalt auf, durch den es aber noch plastisch verformbar ist. Auf diese Weise kann das Tonmaterial ohne weitere Zugabe von Wasser direkt in die Pressform eingefüllt und dort zu einem Dachziegel verpresst werden. Bei dem aus dem Stand der Technik bekannten Verfahren wird der von der Halde kommende Ton aber zuerst zu einem Granulat verarbeitet, das anschließend trocknet. Dieser Schritt entfällt bei dem erfindungsgemäßen Verfahren. Der von der Halde kommende Ton wird ohne weitere Aufbereitung durch Wärmezufuhr getrocknet, so dass er anschließend zu einem Tonmaterial aus gebrochenem Korn zermahlen werden kann.

Das dabei entstandene Tonmaterial aus gebrochenem Korn hat im Vergleich zu einem Aufbau- oder Sprüh-Granulat ein besseres Formfüllungsvermögen. Zwischen den einzelnen Bruchkörnern verbleiben große Spalte, die erst während des Pressvorgangs beim Ineinanderschieben der Bruchkörner verringert werden. Das gebrochene Korn bildet zwischen den einzelnen Bruchkörnern weniger Spalte aus, die beim Pressvorgang durch das Ineinanderschieben der Bruchkörner verkleinert werden. Vergleicht man bei einem erfindungsgemäß hergestellten Dachziegel und einem aus Aufbau- oder Sprüh-Granulat hergestellten Dachziegel das Gefüge unter dem Elektronenmikroskop, dann wird sichtbar, dass beim gebrochenen Korn nach dem Verdichten weniger, aber größere Poren verbleiben, als bei einem Aufbau- oder Sprüh-Granulat. Außerdem hat der erfindungsgemäße Dachziegel eine andere Struktur. Beispielsweise kann keine Granalienstruktur erkennbar sein. Aufgrund der kantigeren Oberflächenstruktur des gebrochenen Korns kommt es beim Pressvorgang zudem zu einer Verhakung bzw. Verkeilung der Körner, was zu einer erhöhten Grünfestigkeit und besseren Sinterung des Dachziegels führt.

Vorzugsweise wird der nicht aufbereitete Ton in einer Brecheinrichtung in Tonbrocken mit einer definierten Größe zerkleinert, wodurch die Trocknungszeit des Tons verkürzt werden kann. Die Tonbrocken sollten für eine schnelle und effiziente Trocknung kleiner als ca. 60mm sein.

Die Trocknung kann in einem beliebigen Trockner erfolgen. Um den Energiebedarf bei der Herstellung des Dachziegels zu reduzieren, kann beispielsweise die Abwärme eines Brennofens verwendet werden, in dem der Dachziegel nach dem Pressen gebrannt wird. Falls erforderlich kann auch mit einem separaten Brenner die notwendige Wärme zugeführt werden.

Der getrocknete Ton soll einerseits eine ausreichende Restfeuchte aufweisen, so dass eine gute Formbarkeit des gebrochenen Korns noch gegeben ist. Andererseits soll die Feuchtigkeit so gering sein, dass vor einem dem Pressen nachfolgenden Brennvorgang keine weitere Trocknung des Tons erforderlich ist. Vorzugsweise wird der Ton so getrocknet, dass dieser nach dem Trocknen und/oder vor dem Pressen einen Feuchtigkeitsgehalt unter 6%, vorzugsweise 2% - 3%, aufweist. In diesem Fall weist auch der Dachziegel einen entsprechend geringen Feuchtegehalt auf, der es erlaubt, die Trockenzeiten und den Energieaufwand für die Trocknung der gepressten Dachziegel deutlich zu reduzieren. Erfolgt vor dem Pressvorgang eine Zwischenlagerung oder ein Transport des gebrochenen Korns, kann in dieser Phase eine geringe Nachtrocknung des Tons erfolgen. In diesem Fall erfolgt die Trocknung so, dass vor dem Pressvorgang der gewünschte Feuchtigkeitsgehalt erreicht wird.

Bei umfangreichen Versuchen hat sich herausgestellt, dass es beim Trockenpressen hinsichtlich der Korngröße einige Grenzen gibt. Ein zu fein gemahlenes, staubförmiges Korn lässt sich nicht mehr richtig verdichten, während ein zu großes Korn sich schwächend auf das Gefüge und negativ auf das Formfüllungsvermögen auswirkt. Zudem kann es bei Vorhandensein von Kalk bei zu großem Korn zu Schäden, sogenannten Kalktreiber, kommen. Um die Eigenschaften des gebrochenen Korns zu verbessern, weist das gebrochene Korn daher erfindungsgemäß ein Körnungsband mit einer Korngröße von 0,1 mm bis 0,6 mm auf. Aus dem gemahlen Ton werden daher ein Unterkorn mit einer Korngröße von weniger als 0,1 mm und ein Überkorn mit einer Korngröße von mehr als 0,6 mm ausgesondert. Auf diese Weise entsteht ein gebrochenes Korn mit einem Körnungsband von 0,1 mm bis 0,6 mm Korngröße, das beim Befüllen der Form eine hohe Packungsdichte bewirkt und sich zudem gut verdichten lässt, so dass das Gefüge des gepressten Dachziegels nur eine geringe Porosität aufweist.

Eine Verschwendung von Rohstoffen kann vermieden werden, wenn das beim Zermahlen des Tons entstehende Unter- und Überkorn recycelt wird.

Beispielsweise wird das ausgesonderte Überkorn im Produktionsfluss vor der Mühle dem feuchten oder dem getrockneten Ton zugeführt. Dieses kann mit dem Ton erneut der Mühle zugeführt und zu kleineren Bruchkörnern zermahlen werden. Da das Überkorn schon die gewünschte Feuchtigkeit aufweist, wird das Überkorn vorzugsweise unmittelbar vor der Mühle dem bereits getrockneten Ton beigemischt.

Das ausgesonderte Unterkorn kann pelletiert oder granuliert werden, wobei die Korngröße der Pellets oder Granalien größer ist als das gewünschte Körnungsband und/oder diesem entspricht. Das so entstandene Tongranulat kann im Produktionsfluss vor der Mühle dem feuchten oder dem getrockneten Ton zugeführt werden und anschließend in der Mühle zermahlen oder direkt dem Tonmaterial für die weiteren Produktionsschritten zugeführt werden.

Das Aussondern des Unterkorns und des Überkorns kann beispielsweise mit einer Zentrifuge oder einem Zyklonabscheider erfolgen.

Vor dem Einbringen des gebrochenen Korns in die Pressform kann eine Zwischenlagerung des gebrochenen Korns in einem Zwischenlager, insbesondere in einem Silo, erfolgen. Die Zwischenlagerung trägt zu einer Homogenisierung des Tonmaterials bei, wobei in dieser Phase beispielsweise ein Ausgleich von geringen Feuchtigkeitsunterschieden innerhalb des gebrochenen Korns erfolgen kann.

Das Mahlen des getrockneten Tons erfolgt beispielsweise in einer Pendelmühle, einer Walzenschüsselmühle oder einer Stabmühle. Eine solche Mühle stellt ein gebrochenes Korn mit einer Struktur her, die ein ideales Verpressen des gebrochenen Korns ermöglicht.

Die Pressform kann eine erste Formhälfte und eine zweite Formhälfte aufweisen, wobei die Formhälften zwischen einer Pressposition, in der die Formhälften im Wesentlichen einen Aufnahmeraum begrenzen, der die Form des fertigen Dachziegels abbildet, wobei die Oberfläche der ersten Formhälfte und die Oberfläche der zweiten Formhälfte jeweils eine Oberfläche des Dachziegels abbildet und einer Füllposition, in der die Formhälften voneinander beabstandet sind und eine plastisch verformbare Formmasse in die erste und/oder die zweite Formhälfte eingefüllt werden kann, relativ zueinander bewegbar sind. Die erste Formhälfte und/oder die zweite Formhälfte weisen mindestens eine Vertiefung auf, die einen Vorsprung des fertigen Dachziegels abbildet, wobei in und/oder an der Vertiefung ein erstes Druckelement vorgesehen ist, das zwischen einer Ausgangsposition, in der das erste Druckelement bezüglich der Form des fertigen Dachziegels zurückversetzt ist, und einer Verdichtungsposition, in der das erste Druckelement abschnittsweise die Oberfläche des Dachziegels abbildet, bewegbar ausgebildet ist. Das eigentliche Verfahren zum Pressen des Dachziegels weist folgende zusätzliche Schritte auf:
- Bereitstellen der Pressform, wobei sich die Formhälften in der Füllposition und das zumindest eine erste Druckelement in der Ausgangsposition befinden,
- Einfüllen eines vorgetrockneten körnigen Tonmaterials in den Aufnahmeraum,
- Bewegen der Formhälften in die Pressposition, wobei das Tonmaterial verdichtet wird,
- Bewegen des zumindest einen Druckelements in die Verdichtungsposition, wobei das Tonmaterial im Bereich des ersten Druckelements verdichtet wird.

Da das erste Druckelement nach dem Schließen der Pressform bzw. dem Bewegen der Formhälften in die Pressposition in die Verdichtungsposition bewegt wird, erfolgt durch das erste Druckelement eine Nachverdichtung des Tonmaterials in den Bereichen, in denen allein durch das Verschieben der Formhälften keine ausreichende Verdichtung erfolgt, beispielsweise in den Vertiefungen, die Vorsprünge des fertigen Dachziegels abbilden. Dadurch kann die Festigkeit des Dachziegels in diesen Bereichen erhöht werden, so dass der Dachziegel eine höhere Festigkeit und Beständigkeit gegen äußere Einflüsse aufweist.

Beim Verdichten drückt sich das Druckelement in die Oberfläche des Dachziegels ein, wodurch die Oberfläche des Dachziegels in den nachverdichteten Bereichen mit einer Prägung versehen wird. Die Prägung verleiht dem Dachziegel ein charakteristisches Äußeres und bleibt auch nach dem Brennvorgang erhalten. Je nach Anzahl, Größe und Anordnung der verwendeten Druckelemente entstehen daher auf der Oberfläche des Dachziegels unterschiedliche Prägemuster.

Die oben genannten Vorsprünge können sich auf der Ober- und/oder der Unterseite des Dachziegels befinden. Der Dachziegel kann beispielsweise auf seiner Oberseite eine Kopf- und Seitenfalze aufweisen und auf seiner Unterseite mit Einhängenasen, Stapelpunkten, Lattenschonern und Versteifungsrippen versehen sein.

Nach Beendigung des Pressvorgangs wird vorzugsweise das erste Druckelement in die Ausgangsposition bewegt, wodurch sich der gepresste Dachziegel im Bereich der Vertiefungen von der jeweiligen Formhälfte lösen kann und eine Entformung vereinfacht wird. Anschließend werden die Formhälften in die Füllposition bewegt und der Dachziegel wird aus der Pressform entnommen. Die Gefahr von Beschädigungen des gepressten Dachziegels bei der Entnahme aus der Pressform durch ein Anhaften des Dachziegels an einer Formhälfte kann so reduziert werden.

Vorzugsweise ist eine Führung für die erste und/oder die zweite Formhälfte vorgesehen, wobei die Führung gemeinsam mit den Formhälften den Aufnahmeraum in der Füllposition und in der Pressposition vollständig begrenzt. Die Führung kann mehrere Führungsteile aufweisen und vor dem Öffnen der Formhälften in eine Entformungsposition bewegt werden. Ton weist im Trockenpressverfahren eine Rückdehnung des gepressten Tonmaterials auf. Die Rückdehnung liegt bei ca. 0,3 - 0,7%. Wird die Pressform zur Entnahme des gepressten Dachziegels innerhalb der den Aufnahmeraum seitlich begrenzenden Führung geöffnet, dehnt sich der gepresste Dachziegel aus und verklemmt sich innerhalb der Führung, wodurch der gepresste Dachziegel beschädigt werden kann oder schwerer aus der Pressform zu entnehmen ist. Um derartige Probleme zu vermeiden, wird die Führung seitlich, also parallel zur Erstreckungsrichtung der Formhälften, in eine, von den Formhälften beabstandete, Entformungsposition bewegt, in der der gepresste Dachziegel auch bei einer Rückdehnung des Tonmaterials nicht an der Führung anliegen kann, so dass sich der Dachziegel in der Erstreckungsrichtung im Wesentlichen parallel zur Oberfläche der Formhälften ausdehnen kann.

An der Oberfläche der ersten und/oder der zweiten Formhälfte kann zumindest ein zweites Druckelement vorgesehen sein, das zwischen einer Ausgangsposition, in der das zweite Druckelement bezüglich der Form des fertigen Dachziegels vorsteht oder zurückversetzt ist, und einer Verdichtungsposition, in der das zweite Druckelement abschnittsweise die Oberfläche der Form des Dachziegels abbildet, bewegbar ausgebildet ist, wobei das zweite Druckelement während oder nach dem Bewegen der Formhälften in die Pressposition in die Verdichtungsposition bzw. nach Beendigung des Pressvorgangs zurück in die Ausgangsposition bewegt wird. Durch dieses zweite Druckelement ist beispielsweise eine Nachverdichtung des Tonmaterials außerhalb der Vertiefungen möglich.

Vorzugsweise ist das zweite Druckelement aber mit einem in der Vertiefung vorgesehenen ersten Druckelement gekoppelt. Das erste Druckelement wird durch die Bewegung des zweiten Druckelements von der vorstehenden Position in die Verdichtungsposition von der zurückversetzten Position in die Verdichtungsposition gedrängt. Das zweite Druckelement wird in dieser Ausführungsform genutzt, um das erste Druckelement in die Verdichtungsposition zu bewegen. Dabei kann das zweite Druckelement als Steuerungselement verwendet werden. Vorzugsweise sind das erste und das zweite Druckelement aber hydraulisch gekoppelt, so dass durch den auf das zweite Druckelement wirkenden Druck ein Bewegen des ersten Druckelements in die Verdichtungsposition erfolgt.

Die Koppelung von ersten und zweiten Druckelementen ermöglicht eine einfachere Steuerung der Bewegung der ersten und der zweiten Druckelemente zwischen der jeweiligen Ausgangsposition und der jeweiligen Verdichtungsposition. Durch das Verschieben der Formhälften in die Pressposition wird durch das Tonmaterial Druck auf das zweite Druckelement ausgeübt, durch den das zweite Druckelement in die Verdichtungsposition bewegt wird. Durch die Bewegung des zweiten Druckelements in die Verdichtungsposition wird auch das mit dem zweiten Druckelement gekoppelte erste Druckelement in die Verdichtungsposition bewegt, so dass keine separate Ansteuerung für das erste Druckelement erforderlich ist.

Des Weiteren ist eine einfache Entformung des Dachziegels aus der Form möglich. Beispielsweise steht das zweite Druckelement in der Ausgangsposition über die Form des fertigen Dachziegels vor und wird durch den beim Bewegen der Formhälften in die Pressposition ansteigenden Druck in die Verdichtungsposition bewegt. Durch die Koppelung des ersten und des zweiten Druckelements wird das erste Druckelement in die Verdichtungsposition bewegt. Beim Öffnen der Form, also einer Bewegung der Formhälften in die Füllposition, wird der Druck auf die zweiten Druckelemente reduziert, so dass sich diese zurück in die vorstehende Position bewegen können, wodurch der gepresste Dachziegel angehoben und von der Oberfläche der Form gelöst wird. Das mit dem zweiten Druckelement gekoppelte erste Druckelement wird gleichzeitig zurück in die bezüglich der Form des Dachziegels zurückversetzte Ausgangsposition bewegt, wodurch sich der Dachziegel auch im Bereich der Vertiefung von der jeweiligen Formhälfte lösen kann. Insgesamt haftet der Dachziegel anschließend nicht oder nur noch geringfügig an der jeweiligen Formhälfte, so dass die Gefahr von Beschädigungen bei der Entnahme des Dachziegels reduziert werden kann.

Vorzugsweise sind mehrere erste Druckelemente und/oder mehrere zweite Druckelemente vorgesehen, wobei die ersten Druckelemente und/oder die zweiten Druckelemente untereinander und/oder miteinander gekoppelt sind. Eine ausreichende Verdichtung des Tonmaterials kann mit einem Druckelement erzielt werden. Werden mehrere, vorzugsweise kleinflächige Druckelemente verwendet, kann die Verdichtung besser gesteuert werden, bzw. der Pressvorgang derart gesteuert werden, dass die Verdichtung jeweils in definierten Bereich mit einem definierten Druck auf das Tonmaterials erfolgt.

Das erste und/oder das zweite Druckelement können ein Druckkissen sein, das einen mit einem, insbesondere inkompressiblen Druckmedium füllbaren, volumenveränderbaren Druckraum aufweist, wobei eine Druckleitung zum Zu- und/oder Abführen des Druckmediums vorgesehen ist, wobei das Bewegen der Druckelemente jeweils durch Einströmen oder Ausströmen des Druckmediums in den Druckraum erfolgt. Ein Druckkissen lässt sich über den Druck bzw. das Volumen des eingefüllten Druckmediums sehr gut steuern. Zudem sind solche Druckkissen wartungsarm. Insbesondere bei Druckkissen hat die Verwendung von mehreren kleinflächigen Druckelementen den Vorteil, dass eine bessere Steuerung der Verdichtung bzw. eine gezielte Verdichtung in definierten Bereichen der Oberfläche des Dachziegels möglich ist. Zudem kann der Verschleiß der Druckkissen reduziert werden, da die Druckkissen so dimensioniert und angeordnet werden können, dass die Druckkissen keine oder nur wenige Biegestellen aufweisen.

Die Verwendung der Druckkissen ermöglicht zudem eine einfache Koppelung erster und/oder zweiter Druckkissen. Beispielsweise sind die Druckleitungen von zumindest einem ersten und/oder zumindest einem zweiten Druckkissen miteinander verbunden. Die Druckkissen können durch die Druckleitungen nach dem Prinzip der kommunizierenden Röhren miteinander verbunden sein. Dadurch erfolgt zwischen den einzelnen Druckkissen ein Druckausgleich, so dass in den Druckkissen annähernd der gleiche Druck herrscht, wodurch die Verdichtung im Bereich der verschiedenen Kissen mit dem gleichen Druck erfolgt.

Beispielsweise bilden die Druckkissen ein geschlossenes System, in dem das Druckmedium mit einem geringen Überdruck von ca. 15-Pa bis 7 Pa eingebracht ist. Wird auf ein Druckkissen ein höherer Druck ausgeübt, erfolgt ein Druckausgleich innerhalb des geschlossenen Systems, wodurch das Druckkissen beispielsweise eingedrückt und ein anderes Druckkissen, auf dem ein geringerer Druck wirkt, angehoben wird. Beispielsweise ist jeweils ein als Druckkissen ausgebildetes erstes Druckelement mit einem als Druckkissen ausgebildeten zweiten Druckkissen gekoppelt. Da das zweite Druckelement an der Oberfläche der Formhälfte angeordnet ist, wird auf dieses beim Schließen der Pressform ein hoher Druck ausgeübt, so dass dieses Druckkissen geringfügig eingedrückt wird, bis sich dieses in der Verdichtungsposition befindet. Auf das erste Druckelement wirkt, da dieses in der Vertiefung angeordnet ist, ein geringerer Druck. Durch die Koppelung mit dem ersten Druckkissen strömt das Druckmedium in das erste Drucckissen, so dass dieses angehoben und ebenfalls in die Verdichtungsposition bewegt wird. Mit einem geschlossenen System ist also eine Verdichtung des Tonmaterials in den Vertiefungen ohne eine zusätzliche Steuerung für die Druckelemente möglich.

Ein weiterer Vorteil einer solchen Koppelung von ersten und zweiten als Druckkissen ausgebildeten Druckelementen liegt in einer einfachen Entformung des Dachziegels aus der Form. Wird nach dem Pressvorgang der Druck reduziert, indem die Formhälften voneinander entfernt werden, nimmt der Druck auf die zweiten Druckelemente ab. Das Druckmedium strömt aus den ersten Druckelementen zurück in die zweiten Druckelemente. Die ersten Druckelemente bewegen sich zurück in die Füllposition, wodurch sich der gepresste Dachziegel im Bereich der Vertiefungen von der jeweiligen Formhälfte lösen kann. Das in die zweiten Druckelemente strömende Druckmedium bewirkt ein Aufwölben der zweiten Druckelemente, so dass der Dachziegel angehoben und von der Oberfläche der Formhälfte gelöst wird.

Alternativ oder ergänzend kann eine Druckerzeugungseinrichtung zur Bereitstellung des Druckmediums vorgesehen sein, wobei zumindest eine Druckleitung an der Druckerzeugungseinrichtung angeschlossen ist. Beispielsweise können die Druckelemente einzeln an der Druckerzeugungseinrichtung angeschlossen sein, um diese einzeln ansteuern zu können. In einer alternativen Ausführungsform können aber auch mehrere Druckelemente, die untereinander gekoppelt bzw. verbunden sind, gemeinsam an der Druckerzeugungseinrichtung angeschlossen sein.

Die Pressform kann eine Füllvorrichtung zum Einbringen eines insbesondere vorgetrockneten Tonmaterial aufweisen, wobei die Füllvorrichtung eine Überdruck-Einspritzeinrichtung aufweist und die Füllvorrichtung das Tonmaterial mit Überdruck in den Aufnahmeraum einspritzt, wobei das Tonmaterial vorverdichtet wird.

Das Tonmaterial wird im Wesentlichen parallel zur Oberfläche der ersten und/oder der zweiten Formhälfte verlaufenden Richtung eingespritzt. Vorzugsweise wird es in Längsrichtung der Form eingebracht.

Die Formhälften können nach dem Einfüllen des Tonmaterials in eine Entlüftungsposition zwischen der Füllposition und der Pressposition bewegt werden, in der im Aufnahmeraum enthaltene Luft aus dem Aufnahmeraum entweichen kann.

Zur Lösung der Aufgabe ist des Weiteren eine Anlage zur Herstellung eines Dachziegels vorgesehen, wobei die Anlage eine Beschickungseinrichtung zur Zuführung eines nicht aufbereiteten Ton, einen Trockner zur Trocknung des Ton, eine Mühle zum Zermahlen des getrockneten Tons sowie zur Bereitstellung eines gebrochenen Korn mit einer Korngröße, die in einem definierten Körnungsband liegt, sowie eine Pressform zum Trockenpressen des Tonmaterial zu einem Dachziegel aufweist. Die Anlage wird mit einem vorstehend beschriebenen Verfahren betrieben.

Beispielsweise ist im Produktionsfluss vor dem Trockner eine Brecheinrichtung zur Vorzerkleinerung des nicht aufbereiteten Tonmaterials zu Tonbrocken mit einer definierten Größe vorgesehen ist. Dadurch kann die Trockenzeit des Tons verkürzt werden.

Die Mühle kann eine Pendelmühle, eine Walzenschüsselmühle oder eine Rührwerkkugelmühle sein.

Optional kann die Mühle eine Sortiervorrichtung zum Aussondern eines Unterkorns, dessen Korngröße unterhalb des definierten Körnungsbandes liegt, und zum Aussondern eines Überkorns, dessen Korngröße oberhalb des definierten Körnungsbandes liegt, aufweisen.

Die Sortiervorrichtung kann des Weiteren eine Rückführeinrichtung für das Überkorn aufweisen, die das Überkorn dem Produktionsfluss vor der Mühle zuführt.

Ergänzend weist die Sortiervorrichtung beispielsweise eine Pelletier- oder Granuliereinrichtung sowie eine Rückführeinrichtung für das Unterkorn auf, wobei die Pelletier- oder Granuliereinrichtung das Unterkorn zu Pellets oder Granalien verpresst und die Rückführeinrichtung die gepressten Tonbrocken dem Produktionsfluss vor der Mühle zuführt.

Die Sortiereinrichtung kann zum Aussondern des Überkorns und/oder des Unterkorns eine Zentrifuge oder einen Zyklonabscheider aufweisen.

Des Weiteren ist zur Lösung der Aufgabe ein Dachziegel aus Ton vorgesehen, der mit einem Trockenpressverfahren hergestellt ist, wobei der Dachziegel mit einem vorstehend beschriebenen Verfahren hergestellt ist.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: Eine Anlage zur Herstellung eines Dachziegels,
- Fig. 2: eine schematische Darstellung der Mühle der Anlage aus Fig. 1,
- Fig. 3: ein Ablaufdiagramm des Verfahrens zur Herstellung eines Dachziegels mit der Anlage aus Fig. 1,
- Fig. 4 & 4a: einen Dachziegel, der mit der Anlage aus Fig. 1 hergestellt wurde,
- Fig. 5a & 5b: eine Pressform zur Herstellung des Dachziegels aus Fig. 4,
- Fig. 6a bis 6e: verschiedene Schritte des Verfahrens zur Herstellung des Dachziegels aus Fig. 4 mit der Pressform aus den Figuren 5a & 5b und,
- Fig. 7: das Prägemuster eines Dachziegels, der in der Pressform gemäß den Figuren 5a & 5b hergestellt wurde.

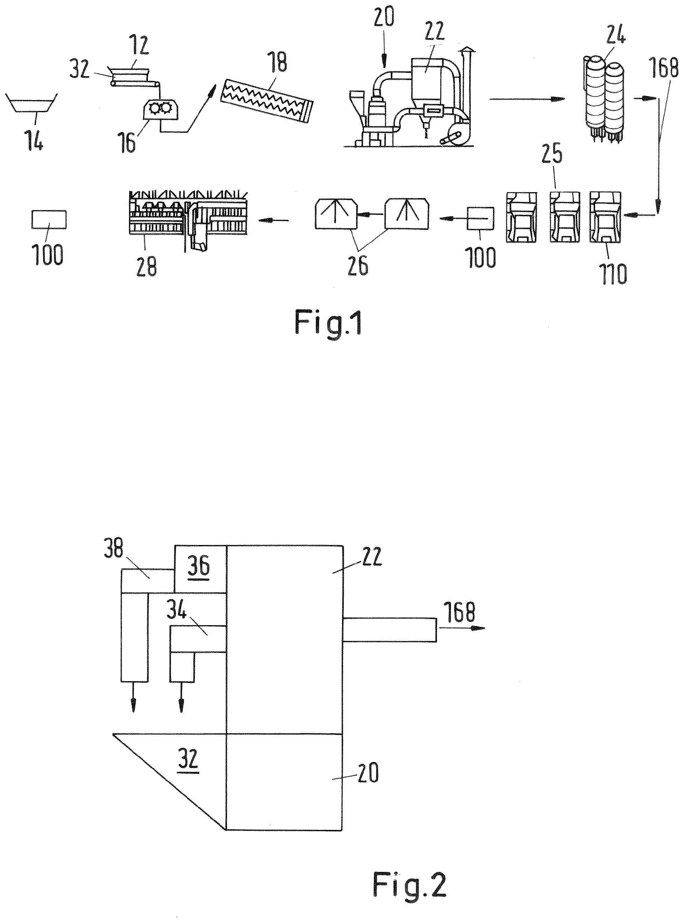

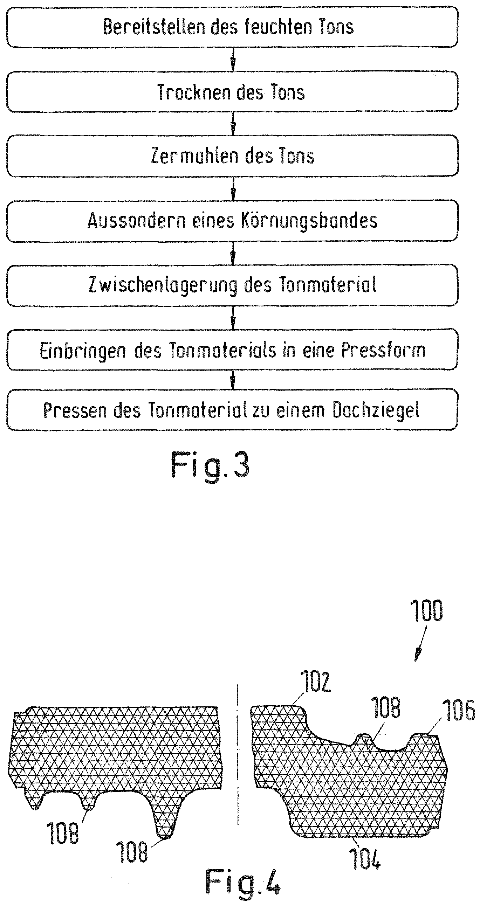

Figur 1 zeigt eine Anlage 10 zur Herstellung eines in Figur 4 gezeigten Dachziegels 100 aus einem Tonmaterial.

Die Anlage 10 hat eine Beschickungseinrichtung 12, beispielsweise einen Kastenbeschicker, der einen von einer Halde 14 kommenden, nicht aufbereiteten Ton 32 der Anlage 10 zuführt.

Hinter der Beschickungseinrichtung 12 ist eine Brecheinrichtung 16 vorgesehen, die den Ton 32 auf Tonbrocken mit einer definierten Größe zerkleinert. Die Tonbrocken weisen vorzugsweise eine Größe von maximal 60mm auf.

Hinter der der Brecheinrichtung 16 ist ein Trockner 18 vorgesehen, der die Tonbrocken trocknet. Vorzugsweise erfolgt die Trocknung derart, dass das in die Pressform 110 einzubringende Tonmaterial 168 eine Restfeuchtigkeit von ca. 2% aufweist. Der Trockner 18 kann beispielsweise ein beliebiger Trockner sein. Abhängig von der Trockenleistung des Trockners 18 können auch größere Tonbrocken getrocknet werden oder es kann auf eine Vorzerkleinerung verzichtet werden.

Hinter dem Trockner 18 ist eine Mühle 20 vorgesehen, die den vorgetrockneten Ton 32 zermahlt und ein Tonmaterial 168 aus gebrochenem, Ton mit einem definierten Körnungsband bereitstellt. Die Mühle 20 ist beispielsweise eine Pendelmühle oder eine Walzenschüsselmühle.

In der Mühle 20 oder unmittelbar hinter der Mühle 20 ist eine Sortiervorrichtung 22 vorgesehen, in der ein Unterkorn, dessen Korngröße unterhalb eines definierten Körnungsbandes liegt, und ein Überkorn, dessen Korngröße oberhalb eines definierten Körnungsbandes liegt, aussortiert werden. Das Körnungsband hat erfindungsgemäß eine Korngröße zwischen 0,1 mm und 0,6 mm.

Die Sortiervorrichtung 22 kann beispielsweise eine Zentrifuge oder einen Zyklonabscheider aufweisen, die eine einfache Trennung verschiedener Korngrößen bei einem trockenen Schüttgut ermöglichen.

Nach der Mühle 20 bzw. der Sortiervorrichtung 22 ist ein Silo 24 zur Zwischenlagerung des Tonmaterials 168 vorgesehen. Im Silo 24 erfolgt durch die Zwischenlagerung eine Homogenisierung des gebrochenen Tonmaterials 168, so dass dieses eine gleichmäßigere Struktur aufweist. Vom Silo 24 wird das Tonmaterial 168 einer Presse 25 zugeführt und dort in einer nachfolgend im Detail beschriebenen Pressform 110 zu einem Dachziegel 100 verpresst.

Zur weiteren Bearbeitung sind hinter der Presse 25 eine Glasier- und/oder Engobiereinrichtung 26 sowie ein Brennofen 28 vorgesehen, in dem der Dachziegel 100 zuerst beschichtet und dann gebrannt wird.

Nachfolgend wird anhand der in Fig. 1 dargestellten Anlage 10 das Verfahren zur Herstellung von Dachziegeln 100 beschrieben.

Zur Herstellung des Dachziegels 100 wird der feuchte, von der Halde 14 kommende, nicht aufbereitete Ton 32 in der Brecheinrichtung 16 vorzerkleinert und dem Trockner 18 zugeführt.

Anschließend erfolgt die Trocknung der Tonbrocken auf eine definierte Restfeuchtigkeit, die so gewählt ist, dass das Tonmaterial 168 beim Einbringen in die Pressform 110 eine Restfeuchtigkeit von ca. 2% - 4% aufweist. Wird der Ton unmittelbar zu Dachziegel weiterverarbeitet, kann eine Trocknung auf eine Restfeuchtigkeit von ca. 2% erfolgen. Erfolgt eine Zwischenlagerung, beispielsweise in einem Silo 24, während der eine weitere Trocknung erfolgen kann, wird die Restfeuchtigkeit so gewählt, dass das Tonmaterial 168 nach der Zwischenlagerung, also unmittelbar vor der Herstellung des Dachziegels 100, eine Restfeuchtigkeit von ca. 2% - 4% aufweist. Der Trockner 18 kann beispielsweise die Abwärme des Brennofens 28 nutzen oder optional einen eigenen Brenner aufweisen.

Die Vorzerkleinerung in der Brecheinrichtung 16 dient lediglich einem schnelleren und gleichmäßigeren Trockenvorgang und der einfacheren Zuführung des Tons 32' in die Mühle 20. Ist ein entsprechend leistungsfähiger Trockner 18 vorgesehen oder wird auf andere Weise während des Trockenvorgangs sichergestellt, dass der Ton 32 die gewünschte Restfeuchtigkeit hat, kann auf eine Vorzerkleinerung verzichtet werden.

Nachfolgend werden die vorgetrockneten Tonbrocken in der Mühle 20 zerkleinert, ein Bruchkorn mit einem definierten Körnungsband aussortiert und im Silo 24 zwischengelagert.

Zur Herstellung des Dachziegels wird das Tonmaterial 168 aus gebrochenem, getrocknetem Ton in die Pressform 110 eingebracht und vorverdichtet. Anschließend wird das Tonmaterial 168 auf die Form des Dachziegels 100 verdichtet. Das Tonmaterial 168 weist dabei eine Restfeuchtigkeit auf, durch die das Tonmaterial 168 plastisch verformbar ist. Das Tonmaterial 168 kann also ohne weitere Zugabe von Wasser direkt in die Pressform 110 eingefüllt und dort zu einem Dachziegel 100 verpresst werden.

Das Tonmaterial 168 weist bereits eine Feuchtigkeit von vorzugsweise unter 2% auf, so dass nach dem Pressvorgang keine weitere Trocknung des Dachziegels 100 erforderlich ist. Durch die bereits vor dem Mahlvorgang erfolgte Trocknung des Tons 32, erfolgt zudem nach dem Pressvorgang kein trocknungsbedingtes Schwinden des Tonmaterials 168, so dass nach dem Pressvorgang keine oder nur eine geringfügige Formänderung des Dachziegels 100 erfolgt.

Anders als bei den bekannten Verfahren wird der von der Halde kommende Ton 32 nicht zuerst zu einem Granulat verarbeitet, das anschließend trocknet, sondern der von der Halde kommende Ton 32 wird ohne weitere Aufbereitung durch Wärmezufuhr getrocknet, so dass er anschließend zu einem Tonmaterial 168 aus gebrochenem Korn zermahlen werden kann.

Bei umfangreichen Versuchen hat sich herausgestellt, dass es beim Trockenpressen hinsichtlich der Korngröße einige Grenzen gibt. Ein zu fein gemahlenes, staubförmiges Korn lässt sich nicht mehr richtig verdichten.Ein zu großes Korn wirkt sich schwächend auf das Gefüge und negativ auf das Formfüllungsvermögen aus und kann zudem bei Vorhandensein von Kalk zu Schäden, sogenannten Kalktreiber, führen. Um die Eigenschaften des gebrochenen Korns zu verbessern, weist das gebrochene Korn daher erfindungsgemäß ein Körnungsband mit einer Korngröße von 0,1 mm bis 0,6 mm auf.

Das Unterkorn mit einer Korngröße von weniger als 0,1 mm und das Überkorn mit einer Korngröße von mehr als 0,6 mm werden daher von der Sortiereinrichtung 22 ausgesondert. Auf diese Weise entsteht eine gebrochenes Korn mit einem Körnungsband von 0,1 mm bis 0,6 mm Korngröße, das beim Befüllen der Form 110 eine hohe Packungsdichte bewirkt und sich zudem gut verdichten lässt, so dass das Gefüge des gepressten Dachziegels 100 nur eine geringe Porosität aufweist.

Das Aussondern erfolgt beispielsweise mit einer Zentrifuge oder mit einem Zyklonabscheider.

Das Überkorn mit einer Korngröße von mehr als 0,6 mm wird beispielsweise durch die in Figur 2 gezeigt Rückführeinrichtung 34 dem Ton 32 vor der Mühle 20 zugeführt werden, so dass dieses anschließend in der Mühle 20 zermahlen wird.

Das Unterkorn mit einer Korngröße von weniger als 0,1 mm wird vorzugsweise der in Figur 2 gezeigten Presseinrichtung 36 zugeführt, die das Unterkorn zu Granulat oder Tonbrocken mit einer größeren Korngröße verpresst. Das Granulat oder die Tonbrocken können anschließend durch die Rückführeinrichtung 38 dem Produktionsfluss vor der Mühle 20 zugeführt werden.

Der der Anlage 10 zugeführte Ton 32 wird also vollständig aufbereitet und der Herstellung des Dachziegels 100 zugeführt.

Beispielsweise kann es sich bei den Rückführeinrichtungen 34, 38 um dieselbe Rückführeinrichtung handeln.

In Figur 4 ist eine Schnittansicht eines Dachziegels 100 aus Ton gezeigt, der mit dem oben beschriebenen Verfahren hergestellt wurde. Der Dachziegel weist eine Oberseite 102 und eine Unterseite 104 auf, wobei in der hier gezeigten Ausführungsform die Oberseite 102 die Sichtseite des Dachziegels bildet. Sowohl auf der Oberseite 102 als auch auf der Unterseite 104 des Dachziegels 100 sind Vorsprünge 106, 108 ausgebildet. Die Vorsprünge 106 auf der Oberseite 102 bilden beispielsweise Kopf- oder Seitenfalze, während die Vorsprünge 108 auf der Unterseite 104 Nasen zum Einhängen des Dachziegels an den Dachlatten, Versteifungsrippen oder Stapelpunkte bilden. Abhängig von der Art der Vorsprünge können sich diese abschnittsweise über die Unterseite 104 des Dachziegels 100 erstrecken.

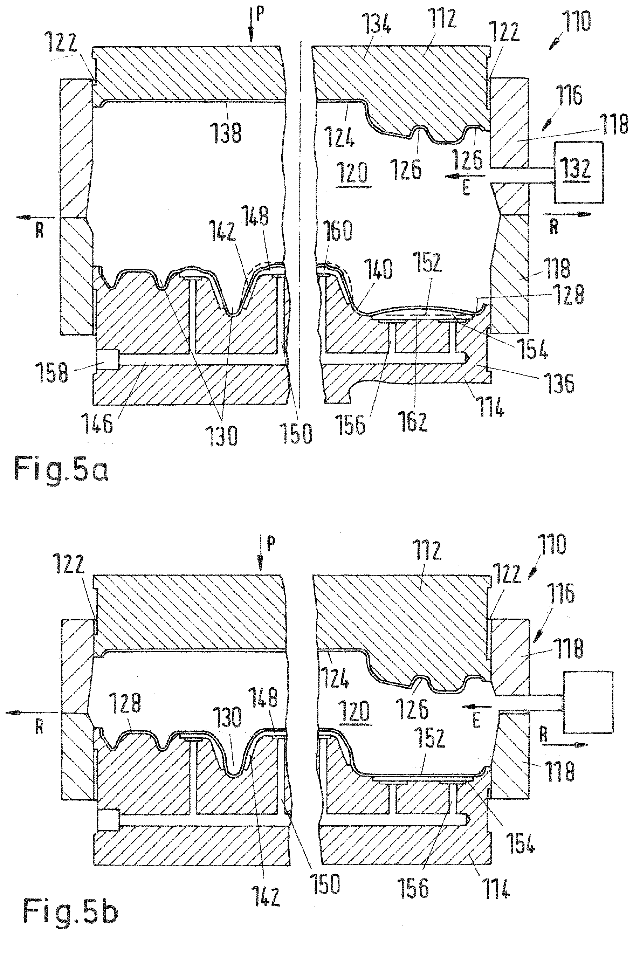

Der Dachziegel 100 wird mit der in den Figuren 5a und 5b gezeigten Pressform 110 im Trockenpressverfahren hergestellt.

Die Pressform 110 hat eine erste, obere Formhälfte 112 sowie eine untere, zweite Formhälfte 114. Die erste Formhälfte 112 bildet im Wesentlichen die Oberseite 102 des Dachziegels 100 ab. Die zweite Formhälfte 114 bildet im Wesentlichen die Unterseite 104 des Dachziegels 100 ab. Des Weiteren ist eine Führung 116 mit mehreren Führungselementen 118 vorgesehen, die gemeinsam mit den Formhälften 112, 114 einen Aufnahmeraum 120 vollständig umschließen. Zwischen den Formhälften 112, 114 und der Führung 116 sind lediglich Entlüftungsöffnungen 122 vorgesehen, durch die vor und während des Pressvorganges Luft aus dem Aufnahmeraum 120 entweichen kann.

An der Oberfläche 124 der ersten Formhälfte 112 sind mehrere Vertiefungen 126 vorgesehen, die die Vorsprünge 106 auf der Oberseite 102 des Dachziegels 100 abbilden. An der Oberfläche 128 der zweiten Formhälfte 114 sind mehrere Vertiefungen 130 vorgesehen, die wie nachfolgend erläutert wird, in der Pressposition der Pressform 110 die Vorsprünge 108 des Dachziegels 100 abbilden.

In Figur 5a ist die Pressform 110 in einer Füllposition gezeigt, in der die Formhälften 112, 114 voneinander beabstandet sind und ein Tonmaterial in den Aufnahmeraum eingefüllt werden kann. Zum Befüllen der Pressform 110 ist eine Füllvorrichtung 132 vorgesehen, die das Tonmaterial mittels Druckluft mit Überdruck in den Aufnahmeraum 120 einspritzen kann. Das Einspritzen erfolgt in einer Einspritzrichtung E im Wesentlichen parallel zur Oberfläche 124, 128 der ersten bzw. der zweiten Formhälfte 112, 114.

Von der in Figur 5a gezeigten Füllposition können die Formhälften 112, 114 in einer Pressrichtung P aufeinander zu in die in Figur 5b gezeigte Pressposition bewegt werden, in der der Aufnahmeraum 120 im Wesentlichen die Form des Dachziegels 100 abbildet. Eine der Formhälften 112, 114 kann ortsfest fixiert sein, so dass nur die jeweils andere Formhälfte 114, 112 bewegt wird. Es ist aber auch möglich, dass beide Formhälften 112, 114 bewegt werden können und beim Pressvorgang des Dachziegels 100 aufeinander zu bewegt werden.

Die Führungselemente 118 sind in einer im Wesentlichen senkrecht zur Pressrichtung P verlaufenden Entnahmerichtung R in eine Entnahmeposition bewegbar, in der die Führungselemente 118 von den Formhälften 112, 114 beabstandet sind.

Die Formhälften 112, 114 weisen jeweils einen Grundkörper 134, 136 aus Stahl, vorzugsweise aus Werkzeuglstahl, auf. Des Weiteren weisen die Oberflächen 124, 128 jeweils eine Beschichtung 138, 140 auf, die in der hier gezeigten Ausführungsform jeweils aus einer PU-Schicht gebildet ist. Durch die Beschichtung 138, 140 wird die Anhaftung des eingefüllten Tonmaterials an den Oberflächen 124, 128 der Formhälften 112, 114 reduziert.

An bzw. in der Vertiefung 130 ist ein erstes Druckelement 142 vorgesehen, das durch ein Druckkissen gebildet ist, das einen mit einem inkompressiblen Druckmedium 146 gefüllten Druckraum 148 aufweist. Das erste Druckelement 142 weist eine Druckleitung 150 auf, durch die das Druckmedium 146, beispielsweise Öl, in den Druckraum 148 einströmen bzw. aus diesem ausströmen kann. Das erste Druckelement 142 ist am Fuß der Vertiefungen 130, also am Übergang zur der ersten Formhälfte 112 zugewandten Oberfläche 128 der zweiten Formhälfte 114 vorgesehen.

An der einen ebenen Bereich ausbildenden Oberfläche 128 der zweiten Formhälfte 114 ist des Weiteren ein zweites Druckelement 152 vorgesehen, dessen Aufbau im Wesentlichen dem Aufbau des ersten Druckelements 142 entspricht. Das zweite Druckelement 152 weist einen Druckraum 154 sowie eine Druckleitung 156 auf, die mit dem Druckmedium 146 gefüllt sind.

Die Druckleitung 156 des zweiten Druckelements 152 ist mit der Druckleitung 148 des ersten Druckelements 142 verbunden, so dass das Druckmedium 146 zwischen dem ersten und dem zweiten Druckelement 142, 152 strömen kann. Des Weiteren sind die Druckleitungen 150, 156 an eine Druckerzeugungseinrichtung 158 angeschlossen, die das Druckmedium 146 bereitstellen und/oder den Druck in den Druckleitungen 150, 156 bzw. den Druckelementen 142, 152 einstellen kann. Vorzugsweise weist das Druckmedium 146 einen Überdruck von ca. 5 Pa bis 7 Pa auf.

Die Druckelemente 142, 152 sind jeweils durch eine Aussparung 160, 162 im Grundkörper 136 der zweiten Formhälfte 114 sowie die als Membran ausgebildete Beschichtung 140 gebildet.

In der in Figur 5a gezeigten Füllposition ist das zweite Druckelement 152 in einer Ausgangsposition in Richtung des Aufnahmeraums 120 gewölbt, steht also über die Form des fertigen Dachziegels 100 (siehe gestrichelte Linie) vor. Das erste Druckelement 142 ist in der Füllposition in einer Ausgangsposition gegenüber der Form des fertigen Dachziegels 100 zurückversetzt.

Das erste und das zweite Druckelement 142, 152 sind durch die Druckleitungen 150, 156 derart miteinander gekoppelt, dass das erste Druckelement 142 durch ein Bewegen des zweiten Druckelements 152 in eine Verdichtungsposition, in der das zweite Druckelement 152 abschnittsweise die Form des fertigen Dachziegels abbildet, durch das aus dem zweiten Druckelement 152 ausströmende und in das erste Druckelement 142 einströmende Druckmedium 146 nach außen in eine Verdichtungsposition (gestrichelte Linie) bewegt wird, in der das erste Druckelement 142 ebenfalls einen Abschnitt der Form des Dachziegels 100 abbildet (Siehe Figur 5b).

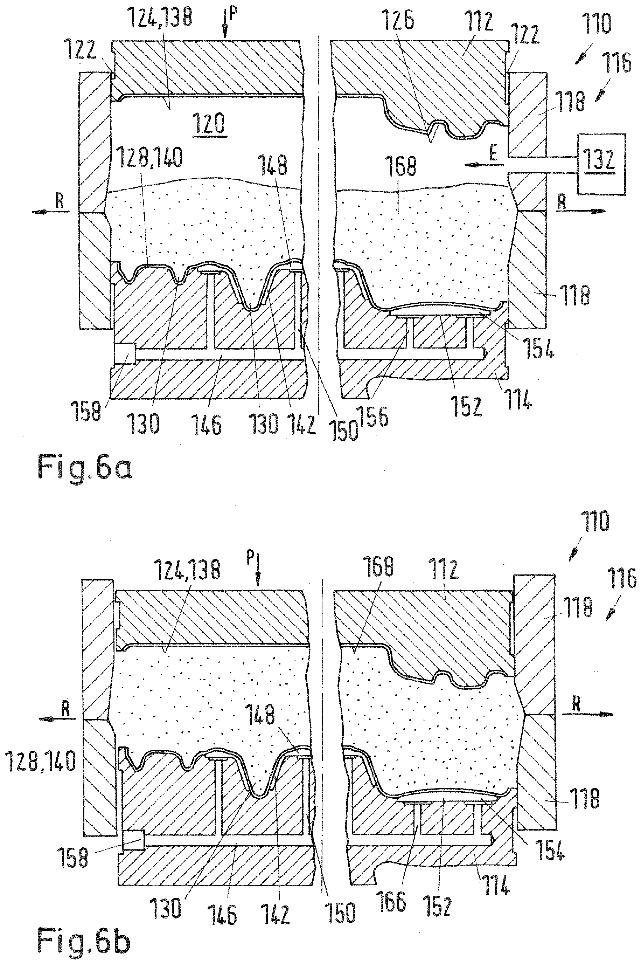

Zur Herstellung eines Dachziegels 100 wird ein vorgetrocknetes Tonmaterial 168, vorzugsweise aus vorgetrocknetem, gebrochenem Ton, mit der Füllvorrichtung 132 unter Druck in die Pressform 110 eingespritzt. Die Formhälften 112, 114 befinden sich jeweils in der Füllposition (Figur 6a).

Ist die gewünschte Menge des Tonmaterials 168 in die Pressform 110 eingebracht, werden die Formhälften 112, 114 in Pressrichtung P in die Pressposition bewegt, in der die Pressform 110 die Form des fertigen Dachziegels 100 abbildet (Figur 6b). Während des Bewegens der Formhälften 112, 114 kann im Aufnahmeraum 120 enthaltene Luft durch die Entlüftungsöffnungen 122 entweichen. Beispielsweise kann zwischen der Füllposition und der Pressposition eine Entlüftungsposition vorgesehen sein, um ein vollständiges Entweichen der Luft aus dem Aufnahmeraum sicherzustellen.

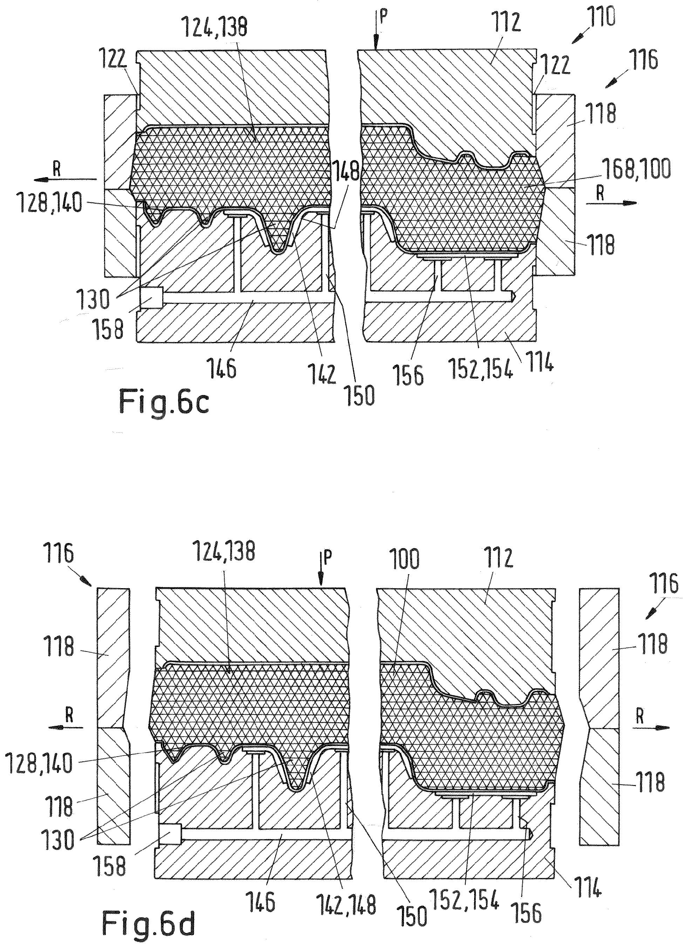

Durch das Verschieben der Formhälften 112, 114 in Pressrichtung P wird auf das Tonmaterial 168 ein in Pressrichtung P wirkender Druck erzeugt, durch den das Tonmaterial 168 verdichtet wird. Der Druck wirkt auch auf das als Druckkissen ausgebildete zweite Druckelement 152, so dass dieses soweit zusammengedrückt wird, bis dieses abschnittsweise die Form des fertigen Dachziegels 100 abbildet, sich also in der Verdichtungsposition befindet (Figur 6c).

Durch die Volumenreduzierung und die Druckerhöhung des zweiten Druckelements 152 strömt das Druckmedium 146 aus dem zweiten Druckelement 152 und über die Druckleitungen 150, 156 in das erste Druckelement 142. In den Vertiefungen 130 ist der durch das Verschieben der Formhälften 112, 114 erzeugte Druck niedriger, so dass das Tonmaterial 168 weniger verdichtet und auf das erste Druckelement 142 ein geringerer Druck ausgeübt wird. Das erste Druckelement 142 kann sich dadurch ausdehnen und in die Verdichtungsposition bewegen, in der das erste Druckelement 142 abschnittsweise die Form des fertigen Dachziegels 100 abbildet.

Durch das Bewegen des ersten Druckelements 142 in die Verdichtungsposition wird auf das Tonmaterial 168 in der Vertiefung 130 ein zusätzlicher Druck ausgeübt, der im Wesentlichen quer zur Pressrichtung P bzw. senkrecht zur Fläche der Vertiefung im Bereich des ersten Druckelements 142 wirkt. Durch diesen Druck wird das Tonmaterial 168 im Bereich der Vertiefung 130 zusätzlich verdichtet, so dass der Dachziegel 100 in diesem Bereich aufgrund der höheren Verdichtung eine höhere Festigkeit aufweist. Der so verdichtete Dachziegel 100 weist eine hohe Frost-Tau-Wechselbeständigkeit auf.

Zur Entnahme des gepressten Dachziegels 100 werden zunächst die Führungselemente 118 in die Entnahmeposition bewegt (Figur 6d). Das im Trockenpressverfahren verwendete Tonmaterial 168 hat eine relativ große Rückdehnung, die auch senkrecht zur Pressrichtung P wirkt. Werden die Formhälften 112, 114 in die Füllposition bewegt, um den gepressten Dachziegel 100 zu entnehmen, kann sich der Dachziegel 100 parallel zu den Oberfläche 124, 128 der Formhälften 112, 114 ausdehnen, so dass der gepresste Dachziegel 100 an der Führung 116 klemmen könnte. Durch das Verschieben der Führungselemente 118 in die Entnahmeposition kann sich der Dachziegel 100 ungehindert ausdehnen.

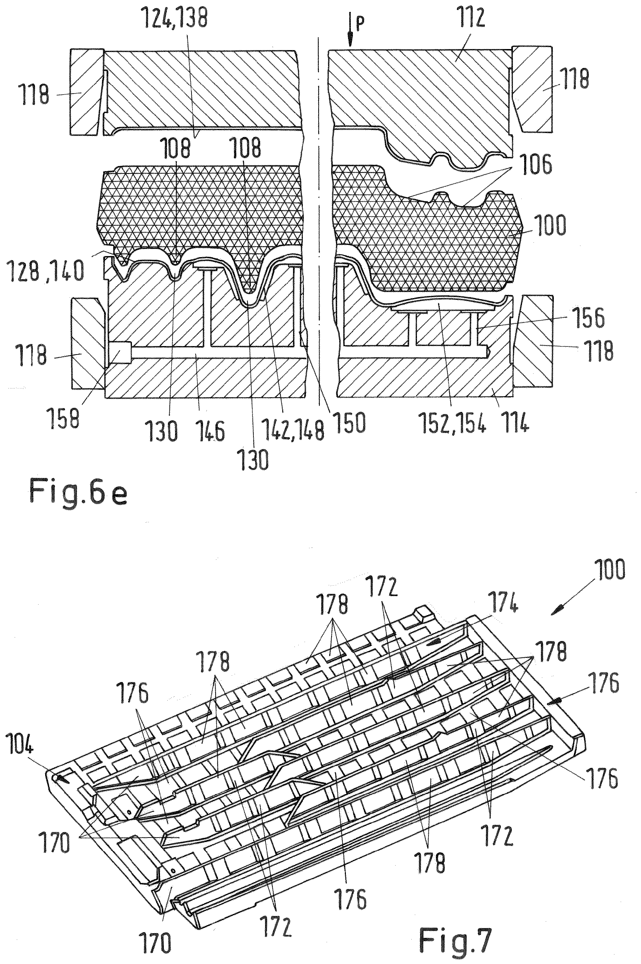

Anschließend werden die Formhälften 112, 114 entgegen der Pressrichtung P in die Füllposition bewegt. Durch das Bewegen der Formhälften 112, 114 entgegen der Pressrichtung P wird der Druck auf das Tonmaterial 168 und somit auf das zweite Druckelement 152 reduziert. Das Druckmedium 146 kann zumindest teilweise vom ersten Druckelement 142 zurück in das zweite Druckelement 152 strömen (Figur 6e).

Dadurch wird das erste Druckelement 142 zurück in die Ausgangsposition bewegt, in der das erste Druckelement 142 bezüglich der Form des gepressten Dachziegels 100 zurückversetzt ist, wodurch sich der Dachziegel 100 im Bereich der Vertiefung 130 von der zweiten Formhälfte 112 lösen kann. Des Weiteren wird der Dachziegel 100 durch das sich aufwölbende zweite Druckelement 152 zusätzlich angehoben, und löst sich so auch von der Oberfläche 128 der zweiten Formhälfte 114. Der Dachziegel 100 wird also beim Öffnen der Pressform 110 von der Oberfläche 128 der zweiten Formhälfte 114 gelöst, so dass eine einfache Entnahme des Dachziegels 100 aus der Pressform 110 möglich ist.

Durch das erste Druckelement 142 wird das Tonmaterial 168 im Bereich der Vertiefungen zusätzlich verdichtet, so dass der Dachziegel 100 eine hohe Stabilität aufweist.

Die Oberseite 102 des Dachziegels 100 bildet die der Witterung ausgesetzte Sichtseite. Bis auf konstruktiv erforderliche Vertiefungen oder Vorsprünge 106, beispielsweise in Form einer Seiten- und /oder Kopfverfalzung, wird diese daher möglichst glatt ausgebildet. Da an der Oberfläche 124 keine beweglichen Teile bzw. keine Druckelemente vorgesehen sind, kann diese Oberfläche 124 optional auch ohne Beschichtung 138 ausgebildet sein, um eine möglichst glatte Oberseite 102 des Dachziegels 100 zu erhalten.

Grundsätzlich ist es möglich, ein großes Druckkissen bzw. ein großes erstes bzw. zweites Druckelement 142, 152 zu verwenden. Erstreckt sich ein solches großes Druckkissen aber über Kanten der Oberfläche 124, 128 der jeweiligen Formhälfte 112, 114, weist das Druckkissen Biegestellen auf, die aufgrund der hohen Beanspruchung schnell verschleißen können. Aus diesem werden mehrere kleine Druckkissen verwendet, wobei die Druckleitungen der Druckkissen miteinander verbunden sein können.

In Fig. 7 ist das das Prägemuster auf der Unterseite 104 des Dachziegels 100 dargestellt, der in der Pressform 110 gemäß den Figuren 5a & 5b hergestellt wurde.

Zur Nachverdichtung wurden erste und zweite Druckelemente 142, 152 verwendet, wobei die ersten Druckelemente 142 so in den Vertiefungen 130 der Formhälfte 114 angeordnet sind, dass sie die im Wesentlichen quer zur Pressrichtung P verlaufenden Flächen 170 des Dachziegels 100 nachverdichten können. Derartige Flächen 170 befinden sich beispielsweise an den Flanken der Versteifungsrippen 172 oder an Übergangsbereichen 174 zur Verfalzung des Dachziegels 100.

Die zweiten Druckelemente 152 sind dagegen in den ebenen Flächen der Pressform 110 angeordnet, so dass sie senkrecht zur Pressrichtung P liegen und die beispielsweise zwischen den Versteifungsrippen 170 liegenden ebenen Flächen 176 des Dachziegels 100 nachverdichten können.

Da sich jedes Druckelemente 142, 152 beim Verdichten in die Oberfläche des Dachziegels 100 eindrückt, entsteht auf der Oberfläche des Dachziegels 100 in jedem nachverdichteten Bereich eine einzelne Prägung 178.

In Abhängigkeit vom Dachziegelmodell kann die Anzahl, Größe und Anordnung der verwendeten Druckelemente 142, 152 unterschiedlich ausfallen. Die einzelnen Prägungen 178 verleihen dem Dachziegel 100 in ihrer Gesamtheit ein charakteristisches Äußeres bzw. Prägemuster, das auch nach dem Brennvorgang erhalten bleibt.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 10: Anlage
- 12: Beschickungseinrichtung
- 14: Halde
- 16: Brecheinrichtung
- 18: Trockner
- 20: Mühle
- 22: Sortiervorrichtung
- 24: Silo
- 25: Presse
- 26: Glasier- und/oder Engobiereinrichtung
- 28: Brennofen
- 32: Ton
- 34: Rückführeinrichtung für Überkorn
- 36: Presseinrichtung
- 38: Rückführeinrichtung für Unterkorn
- 100: Dachziegel
- 102: Oberseite des Dachziegels
- 104: Unterseite des Dachziegels
- 106: Vorsprünge an der Oberseite des Dachziegels
- 108: Vorsprünge an der Unterseite des Dachziegels
- 110: Pressform
- 112: obere Formhälfte
- 114: untere Formhälfte
- 116: Führung
- 118: Führungselemente
- 120: Aufnahmeraum
- 122: Entlüftungsöffnungen
- 124: Oberfläche
- 126: Vorsprünge der Formhälfte 112
- 128: Oberfläche
- 130: Vertiefungen der Formhälfte 114
- 132: Füllvorrichtung
- 134: Grundkörper
- 136: Grundkörper
- 138: Beschichtung
- 140: Beschichtung
- 142: Druckelement
- 146: Druckmedium
- 148: Druckraum
- 150: Druckleitung
- 152: Druckelement
- 154: Druckraum
- 156: Druckleitung
- 158: Druckerzeugungseinrichtung
- 160: Aussparung
- 162: Aussparung
- 168: Tonmaterial
- 170: quer zur Pressrichtung P verlaufenden Flächen des Dachziegels 100
- 172: Versteifungsrippen
- 174: Übergangsbereiche
- 176: senkrecht zur Pressrichtung P liegende ebenen Flächen des Dachziegels 100
- 178: Prägung

- E: Einspritzrichtung
- P: Pressrichtung
- R: Entnahmerichtung

## Patentansprüche

1. Verfahren zur Herstellung eines Dachziegels (100) aus Ton mit folgenden Schritten:
- Bereitstellen des feuchten, nicht aufbereiteten Tons (32),
- Trocknen des Tons (32) bis auf einen definierten Feuchtigkeitsgehalt,
- Zermahlen des getrockneten Tons (32) zu einem Tonmaterial (168) aus gebrochenen Korn in einer Mühle (20),
- Aussondern eines Unterkorns, dessen Korngröße unterhalb von 0,1 mm liegt, und Aussondern eines Überkorns, dessen Korngröße oberhalb von 0,6 mm liegt,
- Einbringen des Tonmaterials (168) in eine Pressform (110), die die Form des Dachziegels (100) abbildet, und
- Pressen des Tonmaterials (168) in der Pressform (110), wobei das Tonmaterial (168) verdichtet wird, **wobei**
das Körnungsband eine Korngröße von 0,1 mm bis 0,6 mm hat.

2. Verfahren nach Anspruch 1, wobei der feuchte Ton (32) auf einen Feuchtigkeitsgehalt zwischen 6% und 2% getrocknet wird.

3. Verfahren nach einem der vorhergehenden Ansprüche, wobei das ausgesonderte Überkorn im Produktionsfluss vor der Mühle (20) dem feuchten oder dem getrockneten Ton zugeführt wird.

4. Verfahren nach einem der vorhergehenden Ansprüche, wobei das ausgesonderte Unterkorn zu einem Tongranulat verpresst wird und anschließend im Produktionsfluss vor der Mühle (20) dem feuchten oder dem getrockneten Ton zugeführt wird.

5. Verfahren nach einem der vorhergehenden Ansprüche, wobei das Aussondern des Unterkorns und des Überkorns mit einer Zentrifuge oder einem Zyklonabscheider erfolgt.

6. Verfahren nach einem der vorhergehenden Ansprüche, wobei vor dem Einbringen des Tonmaterials (168) in die Pressform (110) eine Zwischenlagerung des Tonmaterials (168) in einem Zwischenlager, insbesondere in einem Silo (24), erfolgt.

7. Verfahren nach einem der vorhergehenden Ansprüche, wobei das Mahlen des getrockneten Tons (32) in einer Pendelmühle oder einer Walzenschüsselmühle erfolgt.

8. Verfahren nach einem der vorhergehenden Ansprüche, wobei die Pressform (110) eine erste Formhälfte (112) und eine zweite Formhälfte (114) aufweist, wobei die Formhälften (112, 114) zwischen einer Pressposition, in der die Formhälften (112, 114) im Wesentlichen einen Aufnahmeraum (120) begrenzen, der die Form des fertigen Dachziegels (10) abbildet, wobei die Oberfläche (124) der ersten Formhälfte (112) und die Oberfläche (128) der zweiten Formhälfte (114) jeweils eine Oberfläche (102, 104) des Dachziegels (100) abbildet und einer Füllposition, in der die Formhälften (112, 114) voneinander beabstandet sind und ein plastisch verformbares Tonmaterial (168) in die erste und/oder die zweite Formhälfte (112, 114) eingefüllt werden kann, relativ zueinander bewegbar sind, wobei die erste Formhälfte (112) und/oder die zweite Formhälfte (114) mindestens eine Vertiefung (130) aufweist, die einen Vorsprung (108) des fertigen Dachziegels (100) abbildet, wobei in und/oder an der Vertiefung (130) ein erstes Druckelement (142) vorgesehen ist, das zwischen einer Ausgangsposition, in der das erste Druckelement (142) bezüglich der Form des fertigen Dachziegels (100) zurückversetzt ist, und einer Verdichtungsposition, in der das erste Druckelement (142) abschnittsweise die Oberfläche (102, 104) des Dachziegels (100) abbildet, bewegbar ausgebildet ist, mit folgenden Schritten:
- Bereitstellen der Pressform (100), wobei sich die Formhälften (112, 114) in der Füllposition und das zumindest eine erste Druckelement (142) in der Ausgangsposition befinden,
- Einfüllen einer eines vorgetrockneten körnigen Tonmaterials (168) in den Aufnahmeraum (120),
- Bewegen der Formhälften (112, 114) in die Pressposition, wobei das Tonmaterial (168) verdichtet wird,
- Bewegen des zumindest einen Druckelements (142) in die Verdichtungsposition, wobei das Tonmaterial (168) im Bereich des ersten Druckelements (142) verdichtet wird.

9. Verfahren nach Anspruch 8, wobei nach Beendigung des Pressvorgangs das erste Druckelement (142) in die Ausgangsposition bewegt wird, anschließend die Formhälften (112, 114) in die Füllposition bewegt werden und der Dachziegel (100) aus der Pressform (110) entnommen wird.

10. Verfahren nach Anspruch 9, wobei eine Führung (116) für die erste und/oder die zweite Formhälfte (112, 114) vorgesehen ist, wobei die Führung (116) gemeinsam mit den Formhälften (112, 114) den Aufnahmeraum (120) in der Füllposition und in der Pressposition vollständig begrenzen, wobei die Führung (116) vor dem Bewegen der Formhälften (112, 114) in die Füllposition in eine Entformungsposition bewegt werden.

11. Verfahren nach einem der Ansprüche 8 bis 10, wobei an der Oberfläche (124, 128) der ersten und/oder der zweiten Formhälfte (112, 114) zumindest ein zweites Druckelement (152) vorgesehen ist, das zwischen einer Ausgangsposition, in der das zweite Druckelement (152) bezüglich der Form des fertigen Dachziegels (100) vorsteht oder zurückversetzt ist, und einer Verdichtungsposition, in der das zweite Druckelement (152) abschnittsweise die Oberfläche (102, 104) des Dachziegels (100) abbildet, bewegbar ausgebildet ist, wobei das zweite Druckelement (152) während oder nach dem Bewegen der Formhälften (112, 114) in die Pressposition in die Verdichtungsposition bewegt wird.

12. Verfahren nach Anspruch 11, wobei das zweite Druckelement (152) mit einem in der Vertiefung (130) vorgesehenen ersten Druckelement (142) gekoppelt ist, wobei durch die Bewegung des zweiten Druckelements (152) von der vorstehenden Position in die Verdichtungsposition das gekoppelte erste Druckelement (142) von der zurückversetzten Position in die Verdichtungsposition bewegt wird.

13. Verfahren nach einem der Ansprüche 8 bis 12, wobei das erste und/oder das zweite Druckelement (142, 152) ein Druckkissen ist, das einen mit einem, insbesondere inkompressiblen Druckmedium (146) füllbaren, volumenveränderbaren Druckraum (148, 154) aufweist, wobei eine Druckleitung (150, 156) zum zu und/oder Abführen des Druckmediums (146) vorgesehen ist, wobei das Bewegen der Druckelemente (142, 152) jeweils durch Einströmen oder Ausströmen des Druckmediums (146) in den Druckraum (148, 154) erfolgt.

14. Verfahren nach einem der Ansprüche 8 bis 13, wobei eine Füllvorrichtung (42) zum Einbringen eines insbesondere vorgetrockneten Tonmaterial (168) vorgesehen ist, wobei die Füllvorrichtung (132) eine Überdruck-Einspritzeinrichtung aufweist, wobei die Füllvorrichtung (132) das Tonmaterial (168) mit Überdruck in den Aufnahmeraum (120) einspritzt, wobei das Tonmaterial (168) vorverdichtet wird.

15. Verfahren nach Anspruch 14, wobei das Tonmaterial (168) in einer im Wesentlichen parallel zur Oberfläche (124, 38) der ersten und/oder der zweiten Formhälfte (112,114) verlaufenden Richtung (E) eingespritzt wird.

16. Verfahren nach einem der Ansprüche 8 bis 15, wobei die Formhälften (112, 114) nach dem Einfüllen des Tonmaterials (168) in eine Entlüftungsposition zwischen der Füllposition und der Pressposition werden, in der im Aufnahmeraum (120) enthaltene Luft aus dem Aufnahmeraum (120) entweicht.

17. Anlage (10) zur Herstellung eines Dachziegels (100), wobei die Anlage (10) eine Beschickungseinrichtung (12) zur Zuführung eines nicht aufbereiteten Tonmaterials (32), einen Trockner (108) zur Trocknung des Tonmaterials (32), eine Mühle (20) zum Zermahlen des getrockneten Tonmaterials (32) sowie zur Bereitstellung eines gebrochenen Korns mit einer Korngröße, die in einem definierten Körnungsband liegt, sowie eine Pressform (110) zum Trockenpressen des Tonmaterials (168) zu einem Dachziegel (100) aufweist, **dadurch gekennzeichnet, dass** die Anlage (10) mit einem Verfahren nach einem der vorhergehenden Ansprüche betrieben wird.

18. Anlage nach Anspruch 17, **dadurch gekennzeichnet, dass** im Produktionsfluss vor dem Trockner (18) eine Brecheinrichtung (16) zur Vorzerkleinerung des nicht aufbereiteten Tons (32) zu Tonbrocken mit einer definierten Größe vorgesehen ist.

19. Anlage nach einem der Ansprüche 17 und 18, **dadurch gekennzeichnet, dass** die Mühle (20) eine Pendelmühle oder eine Walzenschüsselmühle ist.

20. Anlage nach einem der Ansprüche 17 bis 19, **dadurch gekennzeichnet, dass** die Mühle eine Sortiervorrichtung (22) zum Aussondern eines Unterkorns, dessen Korngröße unterhalb des definierten Körnungsbandes liegt, und zum Aussondern eines Überkorns, dessen Korngrö-ße oberhalb des definierten Körnungsbandes liegt.

21. Anlage nach Anspruch 20, **dadurch gekennzeichnet, dass** die Sortiervorrichtung (22) eine Rückführeinrichtung (34) für das Überkorn aufweist, die das Überkorn dem Produktionsfluss vor der Mühle (20) zuführt.

22. Anlage nach einem der Ansprüche 20 und 21, **dadurch gekennzeichnet, dass** die Sortiervorrichtung (112) eine Presseinrichtung (36) sowie eine Rückführeinrichtung (38) für das Unterkorn aufweist, wobei die Presseinrichtung (36) das Unterkorn zu Tongranulat verpresst und die Rückführeinrichtung (38) das gepressten Tongranulat dem Produktionsfluss vor der Mühle zuführt.

23. Anlage nach einem der Ansprüche 20 bis 22, **dadurch gekennzeichnet, dass** die Sortiereinrichtung (22) eine Zentrifuge oder einen Zyklonabscheider aufweist.

24. Dachziegel aus Ton, wobei der Dachziegel mit einem Trockenpressverfahren hergestellt ist, **dadurch gekennzeichnet, dass** der Dachziegel (100) mit einem Verfahren nach einem der Ansprüche 1 bis 16 hergestellt ist.

25. Dachziegel nach Anspruch 24, **dadurch gekennzeichnet, dass** der Dachziegel (100) in einem nachverdichteten Bereich eine Prägung (178) aufweist.

## Claims

1. Method of manufacturing a roof tile (100) from clay, comprising the following steps:
- Providing the moist, unprocessed clay (32),
- Drying the clay (32) to a defined moisture content,
- Grinding the dried clay (32) into a clay material (168) of crushed grain in a mill (20),
- separating out an undersize grain whose grain size is below 0.1 mm, and separating out an oversize grain whose grain size is above 0.6 mm,
- introducing the clay material (168) into a pressing mold (110) which reproduces the shape of the roofing tile (100), and
- pressing the clay material (168) in the pressing mold (110), wherein the clay material (168) is compacted, wherein
the grain size of the clay material is from 0.1 mm to 0.6 mm.

2. Method according to claim 1, wherein the moist clay (32) is dried to a moisture content between 6% and 2%.

3. Method according to any one of the preceding claims, wherein the rejected oversize grain is added to the moist or the dried clay in the production flow upstream of the mill (20).

4. Method according to any one of the preceding claims, wherein the separated out undersize grain is compressed into a clay granule and is subsequently fed to the moist or the dried clay in the production flow upstream of the mill (20).

5. Method according to any one of the preceding claims, wherein the separation of the undersize and the oversize grain is carried out with a centrifuge or a cyclone separator.

6. Method according to one of the preceding claims, wherein, before the clay material (168) is introduced into the pressing mold (110), intermediate storage of the clay material (168) takes place in an intermediate store, in particular in a silo (24).

7. Method according to any one of the preceding claims, wherein grinding of the dried clay (32) occurs in a pendulum mill or a vertical roller mill.

8. Method according to any one of the preceding claims, wherein the pressing mold (110) comprises a first mold half (112) and a second mold half (114), the mold halves (112, 114) being movable relative to one another between a pressing position in which the mold halves (112, 114) substantially delimit a receiving space (120) that maps the shape of the finished roof tile (10), the surface (124) of the first mold half (112) and the surface (128) of the second mold half (114) each mapping a surface (102, 104) of the roof tile (100), and a filling position in which the mold halves (112, 114) are spaced apart from one another and a plastically deformable clay material (168) can be filled into the first and/or the second mold half (112, 114), the first mold half (112) and/or the second mold half (114) having at least one depression (130) which maps a projection (108) of the finished roofing tile (100), a first pressure element (142) being provided in and/or at the depression (130) which is designed such that it can be moved between an initial position, in which the first pressure element (142) is set back with respect to the shape of the finished roof tile (100), and a compacting position, in which the first pressure element (142) maps the surface (102, 104) of the roof tile (100) in sections, having the following steps:
- Providing the press mold (100), wherein the mold halves (112, 114) are in the filling position and the at least one first pressure element (142) is in the initial position,
- filling one of a pre-dried granular clay material (168) into the receiving space (120),
- moving the mold halves (112, 114) to the pressing position, wherein the clay material (168) is compacted,
- moving the at least one pressure element (142) into the compacting position, wherein the clay material (168) is compacted in the region of the first pressure element (142).

9. Method according to claim 8, wherein, after completion of the pressing operation, the first pressing element (142) is moved into the initial position, subsequently the mold halves (112, 114) are moved into the filling position and the roof tile (100) is removed from the pressing mold (110).

10. Method according to claim 9, wherein a guide (116) is provided for the first and/or the second mold half (112, 114), wherein the guide (116) together with the mold halves (112, 114) completely delimit the receiving space (120) in the filling position and in the pressing position, wherein the guide (116) is moved into a demolding position before the mold halves (112, 114) are moved into the filling position.

11. Method according to any one of claims 8 to 10, wherein at least one second pressure element (152) is provided on the surface (124, 128) of the first and/or the second mold half (112, 114), which is movable between an initial position, in which the second pressure element (152) protrudes or is set back with respect to the shape of the finished roof tile (100), and a compacting position, in which the second pressure element (152) partially maps the surface (102, 104) of the roof tile (100), wherein the second pressure element (152) is moved into the compacting position during or after the movement of the mold halves (112, 114) into the pressing position.

12. Method of claim 11, wherein the second pressure member (152) is coupled to a first pressure member (142) provided in the recess (130), wherein movement of the second pressure member (152) from the protruding position to the compacting position moves the coupled first pressure member (142) from the recessed position to the compacting position.

13. Method according to any one of claims 8 to 12, wherein the first and/or the second pressure element (142, 152) is a pressure pad which has a volume-variable pressure space (148, 154) fillable with a, in particular incompressible, pressure medium (146), wherein a pressure line (150, 156) is provided for supplying and/or discharging the pressure medium (146), wherein the movement of the pressure elements (142, 152) is effected in each case by inflow or outflow of the pressure medium (146) into the pressure space (148, 154).

14. Method according to any one of claims 8 to 13, wherein a filling device (42) is provided for introducing a clay material (168), in particular a pre-dried clay material (168), wherein the filling device (132) comprises an overpressure injection device, wherein the filling device (132) injects the clay material (168) with overpressure into the receiving space (120), wherein the clay material (168) is pre-compressed.

15. Method according to claim 14, wherein the clay material (168) is injected in a direction (E) substantially parallel to the surface (124, 38) of the first and/or the second mold half (112, 114).

16. Method according to any one of claims 8 to 15, wherein the mold halves (112, 114), after the clay material (168) is injected, are in a venting position between the filling position and the pressing position, in which air contained in the receiving space (120) escapes from the receiving space (120).

17. Plant (10) for manufacturing a roofing tile (100), the plant (10) comprising a coating device (12) for supplying an unprocessed clay material (32), a drier (108) for drying the clay material (32), a mill (20) for grinding the dried clay material (32) and for providing a crushed grain with a grain size which lies in a defined grain size range, and a pressing mold (110) for dry pressing the clay material (168) into a roofing tile (100), **characterized in that** the plant (10) is operated by a method according to one of the preceding claims.

18. Plant according to claim 17, **characterized in that** a crushing device (16) is provided in the production flow upstream of the dryer (18) for precrushing the unprocessed clay (32) into clay lumps having a defined size.

19. Plant according to one of claims 17 and 18, **characterized in that** the mill (20) is a pendulum mill or a vertical roller mill.

20. Plant according to any one of claims 17 to 19, **characterized in that** the mill comprises a sorting device (22) for separating out an undersize particle whose particle size is below the defined particle size range and for separating out an oversize particle whose particle size is above the defined particle size range.

21. Plant according to claim 20, **characterized in that** the sorting device (22) comprises a return device (34) for the oversize grain, which feeds the oversize grain to the production flow upstream of the mill (20).

22. Plant according to one of the claims 20 and 21, **characterized in that** the sorting device (112) comprises a pressing device (36) as well as a return device (38) for the undersize grain, wherein the pressing device (36) presses the undersize grain into clay granules and the return device (38) feeds the pressed clay granules to the production flow upstream of the mill.

23. Plant according to any one of claims 20 to 22, **characterized in that** the sorting device (22) comprises a centrifuge or a cyclone separator.

24. Roofing tile made of clay, wherein the roofing tile is produced by a dry pressing process, **characterized in that** the roofing tile (100) is produced by a process according to any one of claims 1 to 16.

25. Roofing tile according to claim 24, **characterized in that** the roofing tile (100) has an embossing (178) in a post-compacted area.

## Revendications

1. Procédé de fabrication d'une tuile (100) en argile, comprenant les étapes suivantes :
- Mise à disposition de l'argile humide non préparée (32),
- Séchage de l'argile (32) jusqu'à une teneur en humidité définie,
- Broyage de l'argile séchée (32) en un matériau argileux (168) constitué de grains concassés dans un broyeur (20),
- Séparation d'un sous-grain dont la granulométrie est inférieure à 0,1 mm et séparation d'un surgrain dont la granulométrie est supérieure à 0,6 mm,
- Introduction du matériau argileux (168) dans un moule de pressage (110) qui reproduit la forme de la tuile (100), et
- Pressage du matériau en argile (168) dans le moule de pressage (110), le matériau en argile (168) étant compacté, dans lequel
la bande de granulation a une granulométrie de 0,1 mm à 0,6 mm.

2. Procédé selon la revendication 1, dans lequel l'argile humide (32) est séchée jusqu'à une teneur en humidité comprise entre 6% et 2%.

3. Procédé selon l'une quelconque des revendications précédentes, dans lequel les surgrains séparés sont ajoutés à l'argile humide ou à l'argile séchée dans le flux de production en amont du broyeur (20).

4. Procédé selon l'une des revendications précédentes, dans lequel les sous-grains séparés sont comprimés en granulés d'argile et sont ensuite amenés à l'argile humide ou séchée dans le flux de production en amont du broyeur (20).

5. Procédé selon l'une quelconque des revendications précédentes, dans lequel la séparation des sous-grains et des surgrains est effectuée à l'aide d'une centrifugeuse ou d'un séparateur à cyclone.

6. Procédé selon l'une quelconque des revendications précédentes, dans lequel, avant l'introduction du matériau argileux (168) dans le moule de pressage (110), un stockage intermédiaire du matériau argileux (168) est effectué dans un stockage intermédiaire, notamment dans un silo (24).

7. Procédé selon l'une quelconque des revendications précédentes, dans lequel le broyage de l'argile séchée (32) est effectué dans un broyeur pendulaire ou dans un broyeur à galets.

8. Procédé selon l'une quelconque des revendications précédentes, dans lequel le moule de pressage (110) comprend un premier demi-moule (112) et un deuxième demi-moule (114), les demi-moules (112, 114) étant mobiles l'un par rapport à l'autre entre une position de pressage dans laquelle les demi-moules (112, 114) délimitent sensiblement un espace de réception (120) reproduisant la forme de la tuile (10) finie, la surface supérieure (124) du premier demi-moule (112) et la surface (128) du deuxième demi-moule (114) représentant chacune une surface (102, 104) de la tuile (100), et une position de remplissage dans laquelle les demi-moules (112, 114) sont espacées l'une de l'autre et un matériau en argile plastiquement déformable (168) est placé dans le premier et/ou la deuxième demi-moule (112, 114), le premier demi-moule (112) et/ou le deuxième demi-moule (114) présentant au moins un renfoncement (130) qui reproduit une saillie (108) de la tuile (100) finie, un premier élément de pression (142) étant prévu dans et/ou sur le renfoncement (130), qui est réalisé mobile entre une position initiale, dans laquelle le premier élément de pression (142) est en retrait par rapport à la forme de la tuile (100) finie, et une position de compactage, dans laquelle le premier élément de pression (142) reproduit par sections la surface (102, 104) de la tuile (100), avec les étapes suivantes :
- Préparation du moule de pressage (100), les demi-moules (112, 114) se trouvant dans la position de remplissage et l'au moins un premier élément de pression (142) dans la position initiale,
- Remplissage d'une matière argileuse granulaire préséchée (168) dans l'espace de réception (120),
- Déplacement des moitiés de moule (112, 114) dans la position de pressage, le matériau argileux (168) étant compacté,
- Déplacement de l'au moins un élément de pression (142) dans la position de compactage, où le matériau argileux (168) est compacté dans la zone du premier élément de pression (142).

9. Procédé selon la revendication 8, dans lequel, une fois l'opération de compression terminée, le premier élément de compression (142) est déplacé vers la position initiale, puis les demi-moules (112, 114) sont déplacés vers la position de remplissage et la tuile (100) est retirée du moule de compression (110).

10. Procédé selon la revendication 9, dans lequel un guide (116) est prévu pour le premier et/ou le deuxième demi-moule (112, 114), le guide (116) délimitant complètement, conjointement avec les demi-moules (112, 114), l'espace de réception (120) dans la position de remplissage et dans la position de pressage, le guide (116) étant déplacé dans une position de démoulage avant le déplacement des demi-moules (112, 114) dans la position de remplissage.

11. Procédé selon l'une des revendications 8 à 10, dans lequel on prévoit sur la surface (124, 128) du premier et/ou du deuxième demi-moule (112, 114) au moins un deuxième élément de compression (152) qui est déplacé entre une position initiale dans laquelle le deuxième élément de compression (152) est en saillie ou en retrait par rapport à la forme de la tuile finie (100), et une position de compactage dans laquelle le deuxième élément de pression (152) forme une partie de la surface (102, 104) de la tuile (100), le deuxième élément de pression (152) étant déplacé dans la position de compactage pendant ou après le déplacement des demi-moules (112, 114) dans la position de compression.

12. Procédé selon la revendication 11, dans lequel le deuxième élément de pression (152) est couplé à un premier élément de pression (142) prévu dans la cavité (130), le mouvement du deuxième élément de pression (152) de la position en saillie à la position de compactage déplaçant le premier élément de pression couplé (142) de la position en retrait à la position de compactage.

13. Procédé selon l'une des revendications 8 à 12, dans lequel le premier et/ou le deuxième élément de pression (142, 152) est un coussin de pression qui présente une chambre de pression (148, 154) à volume variable pouvant être remplie d'un fluide de pression (146), notamment incompressible, une conduite de pression (150, 156) étant prévue pour amener et/ou évacuer le fluide de pression (146), le déplacement des éléments de pression (142, 152) s'effectuant respectivement par entrée ou sortie du fluide de pression (146) dans la chambre de pression (148, 154).

14. Procédé selon l'une des revendications 8 à 13, dans lequel il est prévu un dispositif de remplissage (42) pour introduire un matériau argileux (168), notamment pré-séché, le dispositif de remplissage (132) comportant un dispositif d'injection en surpression, le dispositif de remplissage (132) injectant le matériau argileux (168) en surpression dans l'espace de réception (120), le matériau argileux (168) étant pré-comprimé.

15. Procédé selon la revendication 14, dans lequel le matériau argileux (168) est injecté selon une direction (E) sensiblement parallèle à la surface (124, 38) du premier et/ou du deuxième demi-moule (112, 114).

16. Procédé selon l'une quelconque des revendications 8 à 15, dans lequel, après remplissage du matériau argileux (168), les demi-moules (112, 114) sont placés dans une position de dégazage entre la position de remplissage et la position de pressage, dans laquelle l'air contenu dans l'espace de réception (120) s'échappe de l'espace de réception (120).

17. Installation (10) pour la fabrication d'une tuile (100), l'installation (10) comprenant un dispositif d'alimentation (12) pour l'alimentation d'un matériau argileux non préparé (32), un séchoir (108) pour le séchage du matériau argileux (32), un broyeur (20) pour le broyage du matériau argileux séché (32) ainsi que pour la mise à disposition d'un grain concassé avec une granulométrie, qui se situe dans une bande granulométrique définie, ainsi qu'un moule de pressage (110) pour le pressage à sec du matériau argileux (168) en une tuile (100), **caractérisé en ce que** l'installation (10) est exploitée avec un procédé selon l'une des revendications précédentes.

18. Installation selon la revendication 17, **caractérisée en ce qu'**il est prévu dans le flux de production, en amont du séchoir (18), un dispositif de concassage (16) pour le pré-broyage de l'argile non préparée (32) en morceaux d'argile de granulométrie définie.

19. Installation selon l'une des revendications 17 et 18, **caractérisée en ce que** le broyeur (20) est un broyeur pendulaire ou un broyeur à galets.

20. Installation selon l'une quelconque des revendications 17 à 19, **caractérisée en ce que** le broyeur comporte un dispositif de tri (22) permettant d'écarter un sous-grain dont la granulométrie est inférieure à la bande granulométrique définie et d'écarter un sur-grain dont la granulométrie est supérieure à la bande granulométrique définie.

21. Installation selon la revendication 20, **caractérisée en ce que** le dispositif de tri (22) comporte un dispositif de recyclage (34) des sur-grains, qui renvoie les sur-grains vers le flux de production en amont du broyeur (20).

22. Installation selon l'une des revendications 20 et 21, **caractérisée en ce que** le dispositif de tri (112) comporte un dispositif de pressage (36) ainsi qu'un dispositif de retour (38) pour les sous-grains, le dispositif de pressage (36) comprimant les sous-grains en granulés d'argile et le dispositif de retour (38) amenant les granulés d'argile comprimés au flux de production en amont du broyeur.

23. Installation selon l'une des revendications 20 à 22, **caractérisée en ce que** le dispositif de tri (22) comprend une centrifugeuse ou un séparateur à cyclone.

24. Tuile en argile, la tuile étant fabriquée par un procédé de pressage à sec, **caractérisée en ce que** la tuile (100) est fabriquée par un procédé selon l'une des revendications 1 à 16.

25. Tuile selon la revendication 24, **caractérisée en ce que** la tuile (100) présente un gaufrage (178) dans une zone post-comprimée.
